# FASCICULE DE BREVET EUROPEEN

(11) **EP 3 762 621 B1**
(45) Date de publication et mention de la délivrance du brevet: **16.08.2023**
(21) Numéro de dépôt: 19709877.5
(22) Date de dépôt: 05.03.2019
(51) Int. Cl.: F16B 12/12, A47B 13/00, A47B 25/00, A47B 96/20

(54) **TABLE NOTAMMENT POUR LA PRATIQUE DU TENNIS DE TABLE**
TISCH, INSBESONDERE ZUM SPIELEN VON TISCHTENNIS
TABLE PARTICULARLY FOR PLAYING TABLE TENNIS

(30) Priorité: 08.03.2018 FR 1852035
(43) Date de publication de la demande: 13.01.2021
(73) Titulaire: Decathlon, 59650 Villeneuve d'Ascq (FR)
(72) Inventeur: TRIBOULT, Joël, 59650 Villeneuve d'Ascq (FR)
(74) Mandataire: Sayettat, Julien Christian
(86) Numéro de dépôt international: PCT/EP2019/055373
(87) Numéro de publication internationale: WO 2019/170628

(56) Documents cités:
- WO-A1-94/22539
- FR-A1- 2 938 164
- US-A- 3 866 550

## Description

L'invention concerne une table formée par assemblage réversible d'au moins un panneau présentant une structure alvéolaire telle que le carton afin d'en réduire son poids.

Elle s'applique en particulier à une table destinée à la pratique d'un jeu et/ou d'un sport, tel que par exemple le tennis de table.

On connaît des tables comprenant un ensemble de piétement qui est formé à partir d'au moins un panneau en carton, sur lequel au moins un plateau est monté de façon réversible.

Le document GB-2 216 787 décrit une telle table dans laquelle le plateau est formé en carton et est monté réversiblement sur l'ensemble de piétement au moyen d'un adhésif.

Cette solution n'apporte pas entière satisfaction, en ce que la fixation adhésive peut perdre de son efficacité au fil des assemblages et désassemblages de la table, ce qui compromet sa durée de vie.

Le document CN-204 485 247 décrit une table destinée à la pratique du tennis de table, dont la surface de jeu est formée par deux plateaux en carton qui sont posés sur une structure en carton prévue à cet effet en partie supérieure de l'ensemble de piétement.

Toutefois, une telle solution ne donne pas non plus entière satisfaction, en ce que le montage des plateaux sur l'ensemble de piétement n'est pas suffisamment fiable. En outre, dans le cadre de la pratique du tennis de table, l'utilisation d'un plateau en carton n'est pas parfaitement satisfaisante s'agissant du rebond de la balle.

Le document WO 94/22539 A1 décrit une troisième table destinée à la pratique du tennis de table.

L'invention vise à perfectionner l'art antérieur en proposant notamment une table formée par assemblage réversible d'au moins un panneau avec un plateau présentant de bonnes propriétés de rebond, notamment pour la pratique d'un sport et/ou d'un jeu tel que le tennis de table, ledit assemblage étant simple à réaliser tout en présentant une fiabilité optimale, et ce même après plusieurs assemblages et désassemblages de ladite table.

A cet effet, et selon un premier aspect, l'invention propose une table, notamment pour la pratique du tennis de table, comprenant un ensemble de piétement qui est formé à partir d'au moins un panneau présentant une structure alvéolaire sur lequel deux plateaux sont montés de façon réversible, chaque plateau présentant une structure différente de celle du panneau, au moins un flan étant fixé à une paroi inférieure dudit plateau, ledit flan présentant au moins un volet libre qui est associé sur l'ensemble de piètement en assurant le montage dudit plateau sur ledit ensemble, les plateaux sont montés sur l'ensemble de piétement de manière à former entre eux un espace dans lequel est disposé un filet de tennis de table.

Selon un deuxième aspect, l'invention propose un kit d'assemblage d'une telle table, ledit kit comprenant au moins un panneau destiné à former un ensemble de piétement de ladite table, ainsi que deux plateaux destinés à être montés sur l'ensemble de piétement par association du volet libre dudit plateau sur ledit ensemble de piétement pour former ladite table.

D'autres particularités et avantages de l'invention apparaîtront dans la description qui suit, faite en référence aux figures annexées, dans lesquelles :
- la figure 1 représente une table selon un mode de réalisation de l'invention ;
- les figures 2a, 2b, 2c et 2d représentent chacune une étape d'assemblage de l'ensemble de piétement de la table de la figure 1 ;
- la figure 3 représente l'étape d'assemblage d'un filet de tennis de table sur l'ensemble de piétement des figures précédentes ;
- la figure 4 représente en vue de dessous un plateau de la table de la figure 1 ;
- la figure 5 représente l'étape d'assemblage du plateau de la figure 4 sur l'ensemble de piétement des figures 2.

En relation avec ces figures, on décrit ci-dessous une table comprenant un ensemble de piétement qui est formé à partir d'au moins un panneau, sur lequel deux plateaux 1 sont montés de façon réversible, ainsi qu'un kit d'assemblage d'une telle table comprenant au moins un panneau destiné à former un tel ensemble de piétement et deux plateaux destinés à être montés sur ledit ensemble pour former ladite table.

En particulier, la table est destinée à la pratique d'un jeu et/ou d'un sport, tel que par exemple le tennis de table, le plateau 1 présentant à cet effet une paroi supérieure 1a destinée à former une surface de jeu.

De façon avantageuse relativement au poids de la table, l'ensemble de piétement est formé à partir d'au moins un panneau présentant une structure alvéolaire, par exemple réalisé en carton ou dans une structure équivalente réalisée en matériau synthétique.

Dans le mode de réalisation représenté, l'ensemble de piétement comprend plusieurs panneaux en carton qui sont assemblés par emboîtement pour former ledit ensemble.

En particulier, l'ensemble de piétement comprend une paire de panneaux verticaux longitudinaux 2 et une paire de panneaux verticaux transversaux 3, chaque panneau transversal 3 étant emboîté entre deux zones latérales en regard des panneaux longitudinaux 2.

De façon avantageuse, les panneaux 2, 3 d'une paire présentent une géométrie identique, ce qui permet de faciliter leur fabrication, et donc la fabrication de la table.

Pour permettre l'assemblage de l'ensemble de piétement, les panneaux longitudinaux 2 ou les panneaux transversaux 3 peuvent comprendre au moins une fente latérale supérieure 3a ou inférieure 2a s'étendant verticalement, et dans laquelle un bord latéral d'un panneau transversal 3 ou longitudinal 2 est emboîté lors dudit assemblage.

Dans le mode de réalisation représenté, les panneaux longitudinaux 2 comprennent chacun deux fentes latérales inférieures 2a s'étendant verticalement, les bords latéraux des panneaux transversaux 3 étant chacun emboîtés dans respectivement une desdites fentes.

De même, les panneaux transversaux 3 comprennent chacun deux fentes latérales supérieures 3a s'étendant verticalement, les bords latéraux des panneaux longitudinaux 2 étant chacun emboîtés dans respectivement une desdites fentes.

Ainsi, pour assembler un panneau longitudinal 2 et un panneau transversal 3, l'utilisateur doit simplement disposer lesdits panneaux perpendiculairement l'un à l'autre de manière à placer une fente latérale 2a, 3a d'un panneau 2, 3 en regard d'une fente latérale 3a, 2a de l'autre panneau 3, 2. Ensuite, l'utilisateur fait coulisser les fentes 2a, 3a l'une dans l'autre jusqu'à ce que les bords inférieurs respectifs des panneaux 2, 3 s'étendent dans un même plan orthogonal aux plans respectifs desdits panneaux.

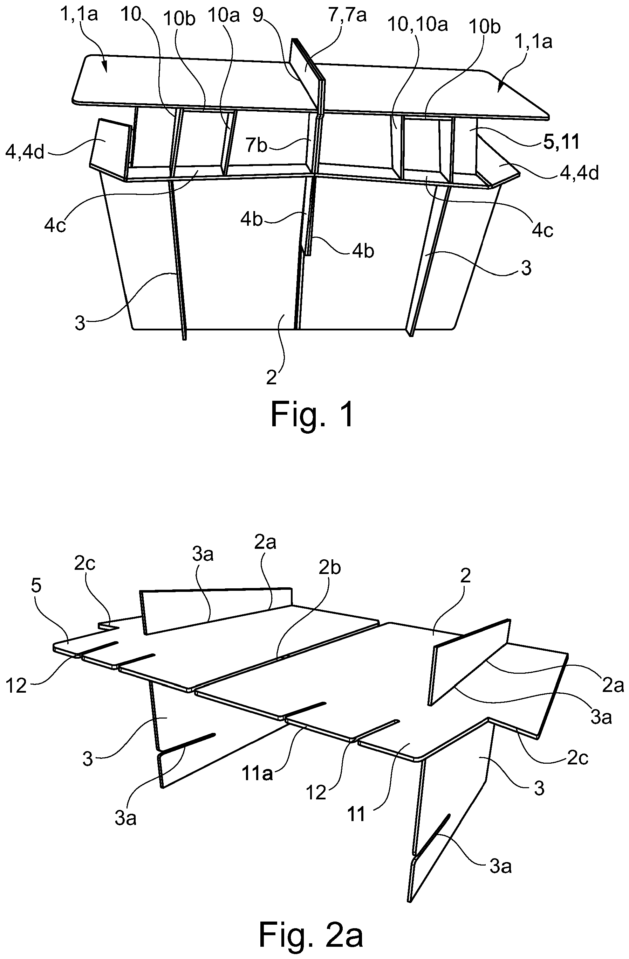

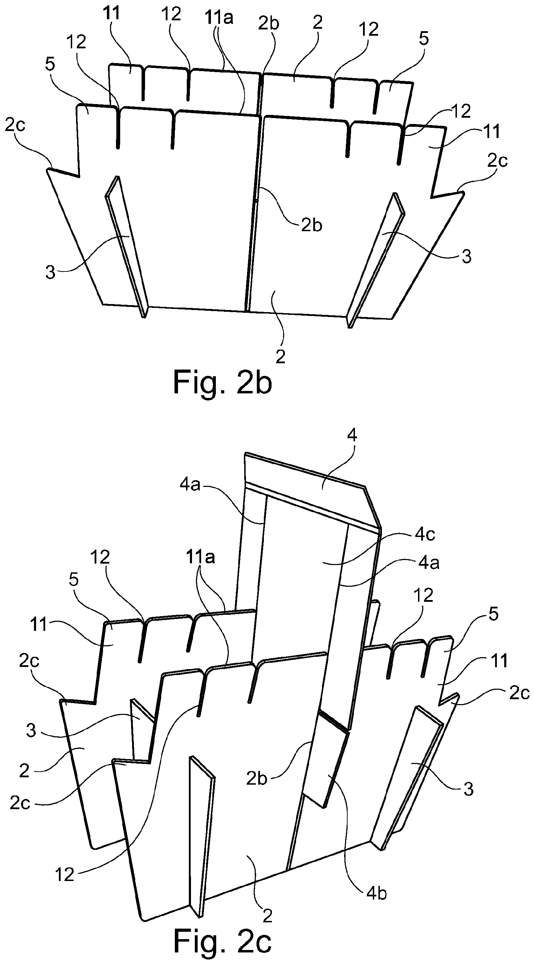

Pour former l'ensemble de piétement, l'utilisateur peut par exemple commencer par assembler les deux panneaux transversaux 3 sur chacune des zones latérales d'un panneau longitudinal 2, comme représenté sur la figure 2a, puis assembler les bords latéraux encore libres desdits panneaux transversaux 3 sur respectivement une zone latérale de l'autre panneau longitudinal 2, afin d'obtenir la configuration représentée sur la figure 2b.

Pour renforcer la partie supérieure de l'ensemble de piétement, c'est-à-dire la partie sur laquelle deux plateaux 1 sont destinés à être montés réversiblement, ledit ensemble de piétement peut comprendre en outre au moins un panneau supérieur horizontal 4 en carton qui est emboîté réversiblement sur au moins un panneau longitudinal 2.

En particulier, le panneau horizontal 4 peut comprendre deux fentes latérales 4a dans chacune desquelles un bord supérieur 5 de respectivement un panneau longitudinal 2 est emboîté réversiblement.

En outre, l'ensemble de piétement peut comprendre deux panneaux horizontaux 4 comprenant chacun un volet intérieur 4b pliable, ainsi qu'au moins une fente centrale supérieure 2b dans laquelle les volets intérieurs pliables 4b sont emboîtés.

Dans le mode de réalisation représenté, chaque panneau horizontal 2 comprend une fente centrale 2b s'étendant verticalement depuis son bord supérieur 5, les volets intérieurs pliables 4b de chaque panneau horizontal 4 étant emboîtés dans chacune desdites fentes centrales.

Chaque panneau horizontal 4 comprend une partie principale 4c qui présente une dimension longitudinale sensiblement égale à la dimension longitudinale des bords supérieurs 5, et sur laquelle sont formées les fentes latérales 4b d'emboîtement desdits bords supérieurs.

En outre, les dimensions respectives des volets intérieurs pliables 4b et des fentes centrales 2b sont agencées de sorte que le bord desdits volets viennent en butée contre le fond desdites fentes lors de l'assemblage des panneaux horizontaux 4 sur les panneaux longitudinaux 2, ce qui permet de fiabiliser ledit assemblage.

Par ailleurs, chaque panneau longitudinal 2 comprend deux saillies supérieures 2c s'étendant de chaque côté du bord supérieur 5, et sur lequel un volet extérieur pliable 4d d'un panneau horizontal 4 est disposé en appui lorsque ledit panneau horizontal est emboîté sur ledit bord supérieur.

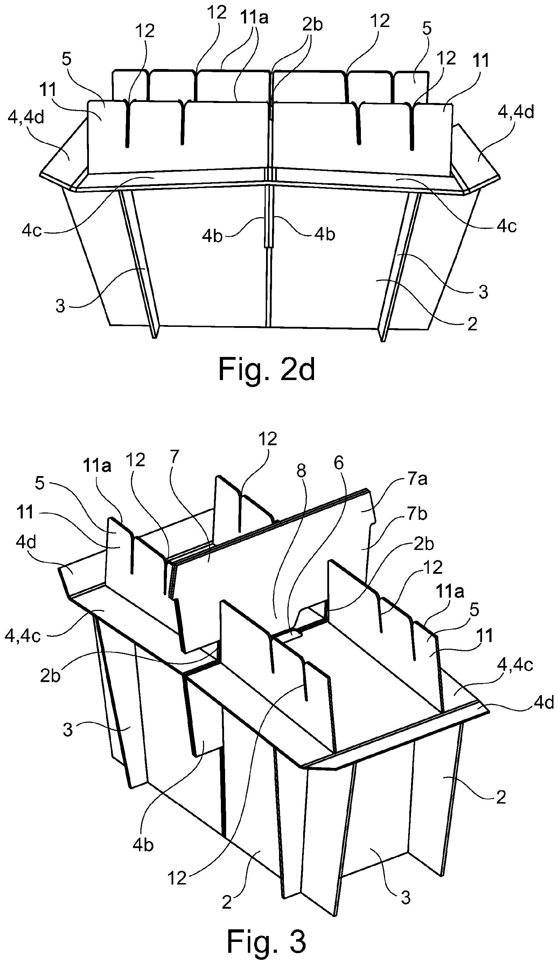

Pour assembler un panneau horizontal 4 sur les panneaux verticaux 2, 3, l'utilisateur peut, en partant de la configuration représentée sur la figure 2b, disposer ledit panneau horizontal sensiblement verticalement, avec son volet intérieur pliable 4b en regard des fentes centrales supérieures 2b, puis coulisser ledit volet dans lesdites fentes jusqu'à ce que le bord dudit volet vienne en butée contre le fond desdites fentes, comme représenté sur la figure 2c. Ensuite, l'utilisateur peut rabattre horizontalement la partie principale 4c de manière à emboiter les bords supérieurs 5 dans chaque fente latérale 4a. Enfin, pour finaliser l'assemblage de l'ensemble de piétement, l'utilisateur peut répéter ces opérations pour assembler l'autre panneau horizontal 4 sur les panneaux verticaux 2, 3, afin d'obtenir la configuration représentée sur la figure 2d.

Pour faciliter leur désassemblage, les panneaux horizontaux 4 présentent chacun un évidement central formé au niveau de la ligne de pliure de leur volet intérieur 4b, lesdits évidements étant agencés pour être disposés en regard à la fin de l'assemblage des panneaux horizontaux, afin de former un évidement 6 avec des dimensions agencées pour permettre le passage d'une main de l'utilisateur pour désemboîter manuellement lesdits volets intérieurs des fentes centrales 2b.

Dans le cas d'une table destinée à la pratique du tennis de table, un filet 7 de tennis de table peut être emboité dans les fentes centrales supérieures 2b après l'assemblage des panneaux horizontaux 4 supérieurs, comme représenté sur la figure 3.

Pour limiter les coûts de fabrication de la table, le filet 7 peut également être formé à partir d'un panneau en carton. Dans le mode de réalisation représenté, le filet 7 est formé d'un panneau en carton qui est replié sur lui-même, de sorte à présenter une épaisseur suffisante pour pouvoir être emboîté avec un jeu minimal dans les fentes centrales 2b qui, dans la mesure où elles sont également agencées pour l'emboîtement des deux volets intérieurs 4b juxtaposés, présentent une épaisseur relativement importante.

Ainsi, le filet 7 est fermement maintenu en place après son emboîtement, ce qui permet d'éviter tout déplacement intempestif dudit filet lors de la pratique du tennis de table. En particulier, le fait que le panneau se plie permet d'avoir une réalisation esthétique, notamment du fait de l'absence de carton coupé en haut. Toutefois, une réalisation avec un panneau non plié est également techniquement envisageable.

Le filet 7 présente une portion supérieure 7a destinée à s'étendre au-dessus de la paroi supérieure 1a du plateau 1 lorsque celui-ci est monté sur l'ensemble de piétement, ainsi qu'une portion inférieure 7b qui est emboitée dans les fentes centrales supérieures 2b.

En particulier, les dimensions respectives de la portion inférieure 7b et des fentes centrales 2b sont agencées de sorte que le bord de la portion inférieure 7b vienne en appui contre les panneaux horizontaux 4, ce qui permet de fiabiliser l'assemblage du filet 7. En outre, la portion inférieure 7b comprend une saillie 8 qui s'étend depuis son bord et qui est disposée dans l'évidement 6 pour centrer le filet 7 latéralement dans ledit évidement tout en facilitant l'assemblage.

Une fois l'ensemble de piétement assemblé, deux plateaux 1 sont montés de façon réversible en partie supérieure dudit ensemble, afin de former la table. En particulier, l'assemblage de l'ensemble de piètement permet d'obtenir une structure en matériau alvéolaire dont la résistance mécanique est suffisante à l'application considérée, notamment relativement à son poids. En outre, le matériau alvéolaire formant les panneaux 2, 3, 4 peut être choisi pour présenter une résistance mécanique et/ou à l'eau qui est adaptée.

Selon l'invention, la table comprend deux plateaux 1 qui sont montés de façon réversible sur l'ensemble de piétement en étant alignés horizontalement pour former une surface d'utilisation continue.

Dans le cas d'une table destinée à la pratique du tennis de table, chaque plateau comprend une paroi supérieure 1a formant une portion de terrain pour un joueur, notamment en présentant un motif formant les lignes dudit terrain. En outre, selon l'invention, les plateaux 1 sont montés sur l'ensemble de piétement de manière à former entre eux un espace 9 dans lequel est disposé le filet 7 de tennis de table. Ainsi, le filet 7 est rigide et coincé entre les deux plateaux 1, ce qui le maintien verticalement notamment en étant inséré de manière verticale entre les deux plateaux 1.

Les plateaux 1 présentent une structure différente de celle des panneaux 2, 3, 4 de l'ensemble de piétement. Ainsi, la structure des plateaux 1 peut être adaptée pour présenter un rebond optimal pour une balle de tennis de table, ce qui permet d'améliorer le confort de jeu, et ce sans trop impacter le poids global de la table. Les plateaux 1 présentent avantageusement une structure pleine, par exemple en étant formés à partir de panneaux de fibres de bois à densité moyenne (MDF). Le plateau 1 peut également être en plateau de table de tennis de table classique, par exemple de type High pressure laminated « mélamine », « HPL » (panneau composite rigide et résistant).

Les plateaux 1 comprennent chacun au moins un flan 10 qui est fixé à leurs parois inférieures 1b respectives. En particulier, chaque flan 10 est rapporté sous le plateau 1, afin notamment de pouvoir être réalisé à base d'un matériau différente dudit plateau, par exemple dans le même matériau que les panneaux 2, 3, 4 tel que le carton. En outre, cette réalisation permet d'utiliser un plateau 1 sans avoir à la retravailler derrière, notamment en n'étant pas obligé de visser dans ledit plateau.

Le flan 10 présente au moins un volet libre 10a qui est associé sur l'ensemble de piétement en assurant le montage du plateau 1 correspondant sur ledit ensemble. Ainsi, même si le plateau 1 présente une structure incompatible avec son assemblage simple et fiable sur l'ensemble de piètement, la présence du flan 10 permet d'assurer cette fonction en relation avec un plateau 1 présentant de bonnes propriétés de rebond.

L'ensemble de piétement comprend deux parois verticales 11 sur au moins une desquelles le volet 10a d'un plateau 1 est emboité, la paroi inférieure 1b dudit plateau étant disposée en appui sur les bords supérieurs 11a desdites parois, afin de garantir la stabilité du montage dudit plateau.

En particulier, les parois verticales 11 sont chacune formées en partie supérieure de respectivement un panneau longitudinal 2, notamment sur les bords supérieurs 5 desdits panneaux longitudinaux qui sont emboîtés dans les panneaux horizontaux 4.

Pour permettre le montage d'un plateau 1, l'ensemble de piétement peut comprendre au moins une fente supérieure 12 dans laquelle est emboîté un volet libre 10a, une telle fente supérieure 12 étant notamment formée dans une paroi verticale 11 en débouchant sur le bord supérieur 11a d'appui de la paroi inférieure 1b.

De même, le volet libre 10a peut comprendre au moins une fente inférieure 13 qui est emboitée sur l'ensemble de piétement.

Le volet libre 10a d'un plateau 1 peut être emboité sur les deux parois verticales 11, afin d'améliorer la stabilité du montage du plateau 1. Pour ce faire, le volet libre 10a et/ou l'ensemble de piétement peut comprendre deux fentes 12, 13 espacées transversalement. En particulier, l'ensemble de piétement peut comprendre deux fentes 12 formées chacune sur respectivement une paroi verticale 11 en étant disposées transversalement en regard.

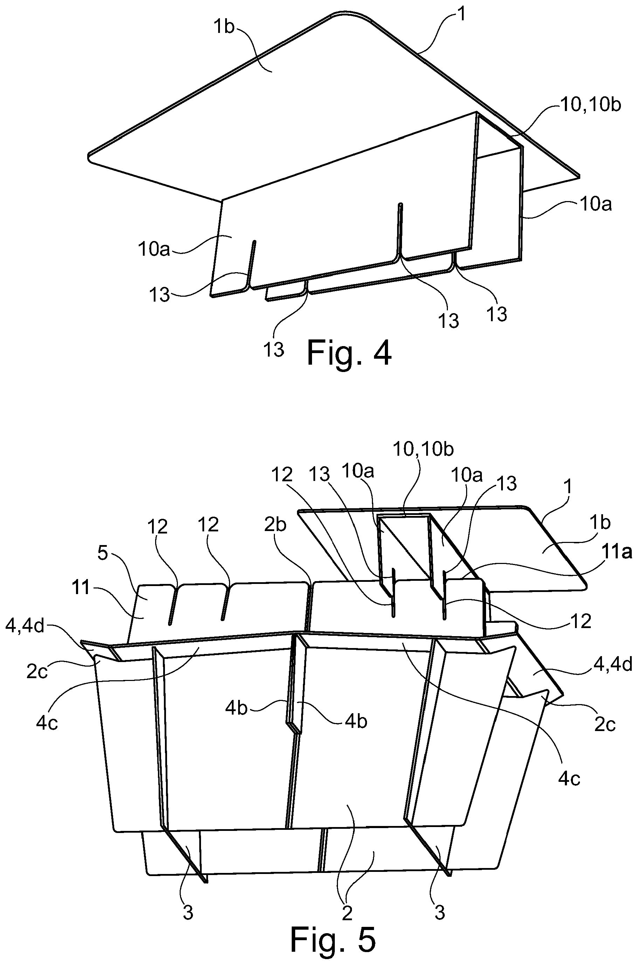

En relation avec les figures 4 et 5, chaque flan 10 comprend un volet central 10b fixé, par exemple par collage, à la paroi inférieure 1b du plateau 1, ainsi que deux volets libres 10a s'étendant de part et d'autre dudit volet central.

De façon avantageuse, les volets 10a, 10b présentent une dimension transversale importante, notamment comprise entre 50% et 100% de la dimension transversale du plateau 1, ce qui permet d'améliorer la stabilité du montage du plateau 1.

En outre, l'ensemble d'empiètement comprend deux fentes 12 d'emboitement espacées longitudinalement, notamment formées sur une paroi verticale 11, les volets libres 10a comprenant chacun une fente 13 qui sont espacées longitudinalement.

Dans le mode de réalisation représenté, l'ensemble de piétement comprend deux groupes de fentes 12 formés de part et d'autre des fentes centrales 2a, et agencés chacun pour le montage de respectivement un plateau 1.

Chaque groupe comprend quatre fentes 12 espacées deux à deux transversalement ou longitudinalement, chaque paroi verticale 11 comprenant notamment deux fentes verticales 12 qui sont espacées longitudinalement sur ladite paroi verticale et qui sont chacune espacées transversalement avec une fente 12 de l'autre paroi verticale 11 disposée en regard.

En relation avec la figure 5, pour monter un plateau 1 sur l'ensemble de piétement, l'utilisateur dispose ledit plateau au-dessus des parois verticales 11 avec les volets libres 10a, et notamment les fentes inférieures 13, en regard de respectivement une paire de fentes 12 espacées transversalement d'un groupe de fentes.

Ensuite, l'utilisateur coulisse chaque volet 10a dans la paire de fentes 12 correspondante jusqu'à ce que la paroi inférieure 1b vienne en butée contre les bords supérieurs 11a. Enfin, pour finaliser l'assemblage de la table, l'utilisateur répète ces opérations pour emboiter les volets libres 10a de l'autre plateau 1 sur l'autre groupe de fentes 12, afin d'obtenir la configuration représentée sur la figure 1.

Selon une réalisation, au moins un panneau longitudinal 2 comprend au moins une empreinte dans laquelle l'utilisateur peut insérer un pied afin de faciliter le démontage du plateau 1 de l'ensemble de piètement.

## Revendications

1. Table, notamment pour la pratique du tennis de table, comprenant un ensemble de piétement qui est formé à partir d'au moins un panneau présentant une structure alvéolaire (2, 3, 4) sur lequel deux plateaux (1) sont montés de façon réversible en étant alignés horizontalement pour former une surface d'utilisation continue, chaque plateau (1) présentant une structure différente de celle du panneau (2, 3, 4), au moins un flan (10) étant fixé à une paroi inférieure (1b) dudit plateau, ledit flan présentant au moins un volet libre (10a) qui est associé sur l'ensemble de piétement en assurant le montage dudit plateau sur ledit ensemble, ladite table étant **caractérisée en ce que** les plateaux (1) sont montés sur l'ensemble de piétement de manière à former entre eux un espace (9) dans lequel est disposé un filet (7) de tennis de table.

2. Table selon la revendication 1, **caractérisée en ce que** le flan (10) comprend un volet central (10b) fixé à la paroi inférieure (1b), et deux volets libres (10a) s'étendant de part et d'autre dudit volet central.

3. Table selon la revendication 2, **caractérisée en ce que** les volets (10a, 10b) présentent une dimension transversale qui est comprise entre 50% et 100 % de la dimension transversale du plateau (1).

4. Table selon l'une quelconque des revendications 1 à 3, **caractérisée en ce que** l'ensemble de piétement comprend au moins une fente supérieure (12) dans laquelle est emboîté le volet libre (10a).

5. Table selon l'une quelconque des revendications 1 à 4, **caractérisée en ce que** le volet libre (10a) comprend au moins une fente inférieure (13) qui est emboîtée sur l'ensemble de piétement.

6. Table selon l'une quelconque des revendications 1 à 5, **caractérisée en ce que** l'ensemble de piétement comprend deux parois verticales (11) sur au moins une desquelles le volet (10a) est emboité, la paroi inférieure (1b) du plateau (1) étant disposée en appui sur les bords supérieurs (1 1a) desdites parois.

7. Table selon l'une quelconque des revendications 1 à 6, **caractérisée en ce que** le plateau (1) présente une structure pleine, notamment en étant formé à partir d'un panneau de fibres de bois à densité moyenne.

8. Table selon l'une quelconque des revendications 1 à 7, **caractérisée en ce que** l'ensemble de piètement comprend plusieurs panneaux (2, 3, 4) qui sont assemblés par emboitement pour former ledit ensemble.

9. Table selon la revendication 8, **caractérisée en ce que** l'ensemble de piètement comprend une paire de panneaux verticaux longitudinaux (2) et une paire de panneaux verticaux transversaux (3), chaque panneau transversal (3) étant emboîté entre deux zones latérales en regard des panneaux longitudinaux (2).

10. Table selon l'une quelconque des revendications 1 à 9, **caractérisée en ce que** l'ensemble de piètement comprend au moins un panneau supérieur horizontal (4) qui est emboîté réversiblement sur au moins un panneau longitudinal (2) de l'ensemble de piètement.

11. Table selon la revendication 10, **caractérisée en ce que** le panneau horizontal (4) comprend deux fentes latérales (4a) dans chacune desquelles un bord supérieur (5) de respectivement un panneau longitudinal (2) est emboîté réversiblement.

12. Table selon l'une des revendications 10 ou 11, **caractérisée en ce que** l'ensemble de piètement comprend deux panneaux horizontaux (4) comprenant chacun un volet intérieur (4b) pliable, l'ensemble de piètement comprenant au moins une fente centrale supérieure (2b) dans laquelle les volets intérieurs (4b) pliables sont emboîtés.

13. Table selon la revendication 12, **caractérisée en ce que** le filet (7) de tennis de table est emboîté dans la fente centrale supérieure (2b).

14. Table selon l'une quelconque des revendications 1 à 13, **caractérisée en ce que** le panneau (2, 3, 4) et/ou le flan (10) est réalisé en carton.

15. Kit d'assemblage d'une table selon l'une quelconque des revendications 1 à 14, ledit kit comprenant au moins un panneau (2, 3, 4) destiné à former un ensemble de piétement de ladite table, ainsi que deux plateaux (1) destinés à être montés sur l'ensemble de piétement par association des volets libres (10a) respectifs desdits plateaux sur ledit ensemble de piétement pour former ladite table.

## Patentansprüche

1. Tisch, insbesondere zum Spielen von Tischtennis, umfassend aus eine Fußgestellbaugruppe, die aus mindestens einer Platte mit zellenartiger Struktur (2, 3, 4) gebildet ist, auf der zwei Tischplatten (1) reversibel befestigt sind, indem sie horizontal ausgerichtet sind, um eine durchgehende Nutzfläche zu bilden, wobei jede Tischplatte (1) eine Struktur aufweist, die sich von der der Platte (2, 3, 4) unterscheidet, wobei mindestens ein Zuschnitt (10) an einer unteren Wand (1b) der Tischplatte befestigt ist, wobei der Zuschnitt mindestens einen freien Flügel (10a) aufweist, der auf der Fußgestellbaugruppe angeordnet wird und die Montage der Tischplatte auf der Baugruppe gewährleistet, wobei der Tisch **dadurch gekennzeichnet ist, dass** die Tischplatten (1) auf der Fußgestellbaugruppe so befestigt sind, dass ein Zwischenraum (9) zwischen ihnen entsteht, in dem ein Netz (7) für Tischtennis angeordnet ist.

2. Tisch nach Anspruch 1, **dadurch gekennzeichnet, dass** der Zuschnitt (10) einen zentralen Flügel (10b), der an der unteren Wand (1b) fixiert ist, und zwei freie Flügel (10a) umfasst, die sich auf beiden Seiten des zentralen Flügels erstrecken.

3. Tisch nach Anspruch 2, **dadurch gekennzeichnet, dass** die Flügel (10a, 10b) eine Querabmessung aufweisen, die zwischen 50 % und 100 % der Querabmessung der Tischplatte (1) beträgt.

4. Tisch nach einem der Ansprüche 1 bis 3, **dadurch gekennzeichnet, dass** die Fußgestellbaugruppe mindestens einen oberen Schlitz (12) umfasst, in den der freie Flügel (10a) eingesteckt ist.

5. Tisch nach einem der Ansprüche 1 bis 4, **dadurch gekennzeichnet, dass** der freie Flügel (10a) mindestens einen unteren Schlitz (13) umfasst, der auf die Fußgestellbaugruppe aufgesteckt ist.

6. Tisch nach einem der Ansprüche 1 bis 5, **dadurch gekennzeichnet, dass** die Fußgestellbaugruppe zwei vertikale Wände (11) umfasst, auf die mindestens einer der Flügel (10a) aufgesteckt ist, wobei die untere Wand (1b) der Tischplatte (1) auf den Oberkanten (11a) der Wände anliegend angeordnet ist.

7. Tisch nach einem der Ansprüche 1 bis 6, **dadurch gekennzeichnet, dass** die Tischplatte (1) eine feste Struktur aufweist, insbesondere indem sie aus einer mitteldichten Holzfaserplatte gebildet wird.

8. Tisch nach einem der Ansprüche 1 bis 7, **dadurch gekennzeichnet, dass** die Fußgestellbaugruppe mehrere Platten (2, 3, 4) umfasst, die durch Ineinanderstecken zum Bilden der Baugruppe montiert werden.

9. Tisch nach Anspruch 8, **dadurch gekennzeichnet, dass** die Fußgestellbaugruppe ein Paar vertikaler Längsplatten (2) und ein Paar vertikaler Querplatten (3) umfasst, wobei jede Querplatte (3) zwischen zwei seitlichen Bereichen gegenüber der Längsplatten (2) eingesteckt ist.

10. Tisch nach einem der Ansprüche 1 bis 9, **dadurch gekennzeichnet, dass** die Fußgestellbaugruppe mindestens eine horizontale obere Platte (4) umfasst, die reversibel auf mindestens eine Längsplatte (2) der Fußgestellbaugruppe aufgesteckt ist.

11. Tisch nach Anspruch 10, **dadurch gekennzeichnet, dass** die horizontale Platte (4) zwei seitliche Schlitze (4a) umfasst, in denen jeweils eine Oberkante (5) jeweils einer Längsplatte (2) reversibel eingesteckt ist.

12. Tisch nach einem der Ansprüche 10 oder 11, **dadurch gekennzeichnet, dass** die Fußgestellbaugruppe zwei horizontale Platten (4) umfasst, die jeweils einen faltbaren Innenflügel (4b) umfassen, wobei die Fußgestellbaugruppe mindestens einen zentralen oberen Schlitz (2b) umfasst, in den die faltbaren Innenflügel (4b) eingesteckt sind.

13. Tisch nach Anspruch 12, **dadurch gekennzeichnet, dass** das Tischtennisnetz (7) in den mittleren oberen Schlitz (2b) eingesteckt ist.

14. Tisch nach einem der Ansprüche 1 bis 13, **dadurch gekennzeichnet, dass** die Platte (2, 3, 4) und/oder der Zuschnitt (10) aus Pappe besteht.

15. Bausatz zur Montage eines Tisches nach einem der Ansprüche 1 bis 14, wobei der Bausatz mindestens eine Platte (2, 3, 4) umfasst, die dazu bestimmt ist, eine Fußgestellbaugruppe des Tisches zu bilden, sowie zwei Tischplatten (1), die dazu bestimmt sind, auf der Fußgestellbaugruppe durch Zusammenfügen der jeweiligen freien Flügel (10a) der Tischplatten auf der Fußgestellbaugruppe montiert zu werden, um den Tisch zu bilden.

## Claims

1. Table, particularly for playing table tennis, comprising a base assembly which is formed from at least one panel having a honeycomb structure (2, 3, 4) on which two trays (1) are mounted reversibly while being aligned horizontally to form a continuous use surface, each tray (1) having a structure different from that of the panel (2, 3, 4), at least one blank (10) being fixed to a lower wall (1b) of said tray, said blank having at least one free flap (10a) which is associated with the base assembly ensuring the mounting of said tray on said assembly, said table being **characterised in that** the trays (1) are mounted on the base assembly so as to form therebetween a space (9) wherein a table tennis net (7) is placed.

2. Table according to claim 1, **characterised in that** the blank (10) comprises a central flap (10b) fixed to the bottom wall (1b), and two free flaps (10a) extending on either side of said central flap.

3. Table according to claim 2, **characterised in that** the flaps (10a, 10b) have a transverse dimension which is comprised between 50% and 100% of the transverse dimension of the tray (1).

4. Table according to any one of claims 1 to 3, **characterised in that** the base assembly comprises at least one upper slot (12) wherein the free flap (10a) is fitted.

5. Table according to any one of claims 1 to 4, **characterised in that** the free flap (10a) comprises at least one lower slot (13) which is fitted onto the base assembly.

6. Table according to any one of claims 1 to 5, **characterised in that** the base assembly comprises two vertical walls (11) on at least one of which the flap (10a) is fitted, the lower wall (1b) of the tray (1) being disposed to rest on the upper edges (11a) of said walls.

7. Table according to any one of claims 1 to 6, **characterised in that** the tray (1) has a solid structure, in particular by being formed from a panel of medium density wood fibres.

8. Table according to any one of claims 1 to 7, **characterised in that** the base assembly comprises several panels (2, 3, 4) which are assembled by fitting to form said assembly.

9. Table according to claim 8, **characterised in that** the base assembly comprises a pair of longitudinal vertical panels (2) and a pair of transverse vertical panels (3), each transverse panel (3) being fitted between two lateral zones opposite the longitudinal panels (2).

10. Table according to any one of claims 1 to 9, **characterised in that** the base assembly comprises at least one horizontal upper panel (4) which is fitted reversibly on at least one longitudinal panel (2) of the base assembly.

11. Table according to claim 10, **characterised in that** the horizontal panel (4) comprises two lateral slots (4a) in each of which an upper edge (5) of respectively a longitudinal panel (2) is reversibly fitted.

12. Table according to one of claims 10 or 11, **characterised in that** the base assembly comprises two horizontal panels (4) each comprising a foldable inner flap (4b), the base assembly comprising at least one upper central slot (2b) wherein the foldable inner flaps (4b) are fitted.

13. Table according to claim 12, **characterised in that** the table tennis net (7) is fitted into the upper central slot (2b) .

14. Table according to any one of claims 1 to 13, **characterised in that** the panel (2, 3, 4) and/or the blank (10) is made of cardboard.

15. Kit for assembling a table according to any one of claims 1 to 14, said kit comprising at least one panel (2, 3, 4) intended to form a base assembly of said table, as well as two trays (1) intended to be mounted on the base assembly by association of the respective free flaps (10a) of said trays on said base assembly to form said table.
